# FASCICULE DE BREVET EUROPEEN

(11) **EP 1 297 377 B1**
(45) Date de publication et mention de la délivrance du brevet: **22.09.2010**
(21) Numéro de dépôt: 01945435.4
(22) Date de dépôt: 14.06.2001
(51) Int. Cl.: G02C 1/02

(54) **NOUVEAU TYPE DE LUNETTES SANS CERCLAGE**
NEUE RANDLOSE BRILLE
NOVEL TYPE OF RIMLESS SPECTACLES

(30) Priorité: 15.06.2000 FR 0007605
(43) Date de publication de la demande: 02.04.2003
(73) Titulaire: Lambert, François, 30600 Aigues Mortes (FR)
(72) Inventeur: Lambert, François, 30600 Aigues Mortes (FR)
(74) Mandataire: Perin, Georges
(86) Numéro de dépôt international: PCT/FR2001/001854
(87) Numéro de publication internationale: WO 2001/096935

(56) Documents cités:
- WO-A-00/26716
- FR-A- 1 051 210
- FR-A- 1 193 800
- US-A- 5 771 086

## Description

La présente invention concerne un nouveau type de lunettes sans cerclage pour la correction des déficiences visuelles ou la protection des yeux.

On trouve aujourd'hui de plus en plus couramment chez les opticiens des lunettes dites du type percées, dont les verres ne sont pas cerclés par une monture mais sont reliés par un pont et maintenues par des vis.

FR-A-1 193 800 décrit des lunettes dont les verres sont reliés sans utilisation de vis à l'aide de fils métalliques et comportant une pièce de liaison centrale servant de pont aux deux verres.

US-A-5771086 décrit pour sa part une forme de lunettes comprenant deux verres indépendants solidarisés sans cerclage à l'aide d'un pont constitué d'un fil métallique. Les verres comprennent un crantage ménagé sur le bord du verre, du côté du nez, ainsi qu'un perçage pour le passage d'une vis.

Leur esthétique fait que ces articles rencontrent un succès commercial important. Ils présentent cependant un certain nombre d'inconvénients, et en particulier :
- Le champ visuel nasal n'est pas complet et souvent limité dans la partie supérieure coté nasal.
- Le porteur est souvent gêné par la vue des vis de fixation dans son champ de regard du coté du nez et dont les perturbations peuvent être insupportables si l'écart pupillaire du patient est faible (dans ce cas, le porteur est souvent obligé d'abandonner ce type de lunettes).
- Les formes de verres restent limitées à des formes classiques et peuvent être difficilement ergonomiques.

Le dispositif selon la présente invention supprime ces inconvénients. En effet, les deux verres sont assemblés bord à bord et le système de liaison des verres se trouve sur le dessus du nez.

Le champ visuel peut donc être maximum du côté nasal, sans apporter de gêne.

Par ailleurs, US-A-2499795 décrit des lunettes comportant une monture totalement installée du même côté que les verres et comprenant un cerclage 14 auquel sont pendus les verres. Cette monture est disposée bien au dessus du champ de vision. La grande surface des verres et ce déport de la monture procurent un champ de vision élargi.

Enfin, US-A-4102566 décrit des lunettes comportant un pont d'assemblage reposant sur le nez, constitué de deux pièces principales, à savoir une pièce arrière et une pièce avant prenant les verres en étau. Ces lunettes comportent un cerclage qui se prolonge sur environ la moitié de la périphérie des verres, qui coopère avec le pont d'assemblage par insertion dans un sillon prévu dans la pièce arrière en étant serré entre la pièce arrière et la pièce avant.

C'est pourquoi la présente demande a pour objet une paire de lunettes sans cerclage comprenant deux verres de lunettes couplés par un élément de liaison, **caractérisée en ce que** les deux verres (2) sont installés bord à bord en contact l'un avec l'autre au dessus de l'emplacement du nez, l'élément de liaison étant constitué d'une barrette.

Dans la présente invention, l'on entend par "paire de lunettes" tant la partie avant comprenant les verres, que la partie avant ainsi que ses branches latérales. L'on entend par « bord à bord », que les verres sont en contact l'un avec l'autre, et en tout cas ne comportent pas de pièces d'encadrement et en particulier pas de charnière à ce niveau.

L'élément de liaison est de préférence dans sa forme la plus simple une barrette d'une longueur pouvant aller notamment de 6 mm à 20 mm pour une largeur de 1 à 3 mm. Il peut avoir une forme simple comme une barrette allongée parallélépipédique ou elliptique aplatie ou une forme plus complexe pour ajouter un caractère décoratif telle qu'une étoile, une calèche, etc....

Il peut comprendre des tiges filetées pour la fixation des verres avec un écrou. Les tiges filetées de l'élément de liaison traversent alors un perçage ménagé sur le côté des verres au dessus du nez. Il peut simplement comprendre des percements pour la fixation des verres grâce à des vis de lunetterie indépendantes de l'élément de liaison.

Il peut aussi être constitué d'au moins un fil métallique courbé en cercle à ses extrémités pour le passage d'une vis ou fileté à ses extrémités pour jouer le rôle d'une vis et traverser un perçage comme ci-dessus.

L'élément de liaison est destiné à relier les deux verres bord à bord et avantageusement à maintenir fermement les verres, notamment en rotation l'un par rapport à l'autre.

C'est pourquoi dans des conditions préférentielles de mise en oeuvre de l'invention, un crantage est prévu sur le bord des verres de préférence dans l'axe médian vertical du nez.

L'élément de liaison comprend alors au moins une saillie prévue de préférence du côté des verres pour coopérer avec un crantage ménagé sur le côté d'un des verres ou des deux verres, ledit crantage étant prévu de préférence au niveau où les verres sont installés bord à bord, ou pour coopérer avec un perçage ménagé dans au moins un verre.

Dans des conditions préférentielles de mise en oeuvre, le crantage est adapté à la section d'une saillie, évitant ainsi le pivotement des verres.

Compte tenu de leur forme originale, les verres peuvent directement reposer sur le nez. Toutefois, dans des conditions préférentielles de mise en oeuvre de l'invention, l'élément de liaison comprend un organe d'appui nasal. Celui-ci peut incorporer la saillie ci-dessus comme illustré ci-après dans les figures. Ainsi, une saillie prévue du côté des verres peut se prolonger vers le bas par une ou deux tiges porte plaquettes de confort.

La présente invention a plus particulièrement pour objet une paire de lunettes **caractérisée en ce que** l'élément de liaison comprend un organe d'appui nasal installé de manière médiane et agencé pour traverser l'orifice constitué par les crantages des verres installés bord à bord.

Dans une configuration préférée, l'élément de liaison comprend deux tiges accolées dans leur partie supérieure permettant le montage des verres bord à bord en coopérant avec les crantages des verres, lesdites tiges étant coudées dans leur partie postérieure et aptes à supporter des plaquettes nasales de confort.

Dans une autre configuration préférée l'élément de liaison comprend deux tiges accolées dans leur partie centrale pour traverser l'orifice constitué par les crantages ménagés dans deux verres installés bord à bord et comportant à une extrémité un passage pour une vis de fixation d'un verre.

Le crantage d'un verre est avantageusement adapté à la section d'une tige, évitant ainsi le pivotement des verres.

Si les verres peuvent être installés bord à bord selon une ligne de forme quelconque, dans d'autres conditions préférentielles de mise en oeuvre, les verres sont montés bord à bord par une tranche rectiligne, de préférence prévue au dessus de l'emplacement du nez.

Les paires de lunettes objet de la présente invention possèdent de très intéressantes qualités.

Le porteur des lunettes selon l'invention a une vision plus proche de la réalité, plus naturelle en n'ayant pas de limite de champ au niveau interne, donc plus confortable

De plus, les montures selon l'invention peuvent avantageusement être proposées avec différentes longueurs de bras de plaquettes pour permettre d'adapter les lunettes à la majorité des cas pouvant se présenter.

En outre, les verres peuvent être remplacés indépendamment très facilement, an cas de rayure, de cassure ou de modification de la déficience visuelle au cours du temps.

De même, la monture peut être changée à tout moment par son utilisateur, qui peut ainsi posséder plusieurs montures pour un seul leu de verres.

La présente demande a aussi pour objet un élément de liaison pour verres de lunettes comprenant
- une partie centrale installée perpendiculairement à la surface des verres et prévue pour traverser l'orifice constitué par l'ensemble de deux crantages ménagés sur les côtés des verres installés bord à bord au dessus de l'axe médian vertical du nez,
- d'un côté deux extrémités agencées pour la fixation d'un verre audit élément de liaison,
et de l'autre côté deux extrémités agencées pour l'installation d'une plaquette nasale de confort.

La présente demande a enfin pour objet un ensemble (kit) pour la réalisation de lunettes comme défini à la revendication 7.

Le gabarit se présente habituellement sous la forme d'un support physique d'un programme de contrôle de l'usinage des verres par un automate.

Les conditions préférentielles de mise en oeuvre des paires de lunettes ci-dessus décrites s'appliquent également aux autres objets de l'invention visés ci-dessus

L'invention sera mieux comprise si l'on se réfère aux dessins annexés sur lesquels
La figure 1 représente en élévation une paire de verres assemblés avec un élément de liaison.
La figure 2 est une vue en perspective de la partie centrale d'un verre avec son élément de liaison.
La figure 3 est une vue analogue à celle de la figure 2 mais avec le verre et son élément de liaison séparés.
La figure 4 représente, une vue de dessus et coupe partielle (au niveau des verres) de la figure 1 avec les branches remontées au niveau de l'élément de liaison et fixées par vis.
La figure 5 représente une vue de face en élévation de deux verres (en partie) joints par un élément de liaison.
La figure 6 représente un élément de liaison formé simplement de deux fils jointifs.

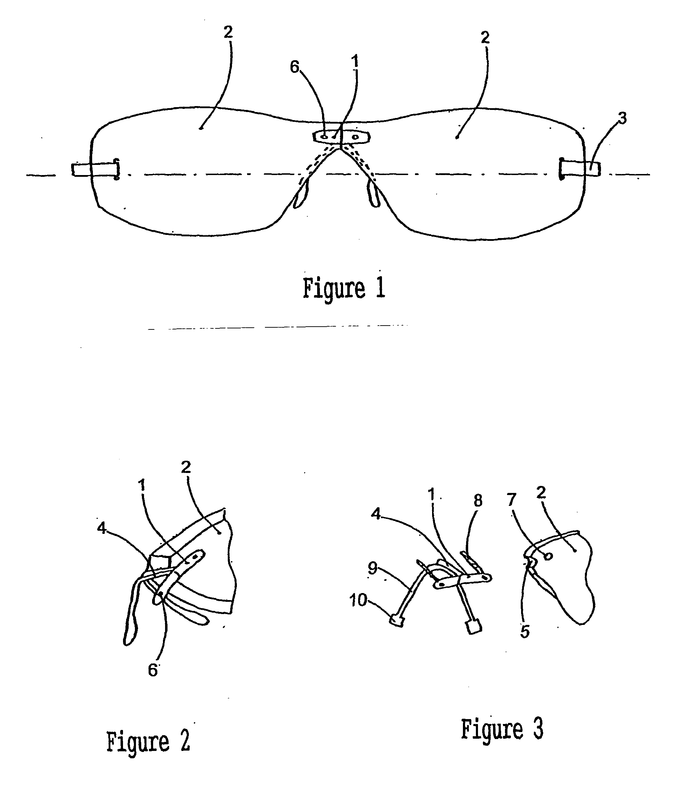

Sur la figure 1, on observe un élément de liaison 1 comprenant une barrette d'environ 1,5 cm de long pour 3 mm de large et pour 1 mm d'épaisseur, servant à joindre deux verres 2. Des branches 3 se poursuivent vers l'arrière pour enserrer la tête et prendre appui sur les oreilles.

Sur la figure 2, on observe que la barrette 1 se poursuit vers l'arrière du côté des verres par une saillie 4.

La saillie 4 coopère avec un crantage 5 ménagé sur le côté du verre 2 prévu au niveau où les verres sont installés bord à bord, comme on peut mieux l'observer sur la figure 3. La barrette 1 comprend deux percements 6 pour le passage de vis de montage non représentées.

Sur la figure 3 la barrette 1 coopère en outre avec un perçage 6 ménagé dans le verre 2 grâce à une tige filetée 8 intégrée à ladite barrette 1. La saillie 4 se poursuit vers l'arrière (vers la figure du porteur) par des tiges 9 dont les extrémités 10 sont agencées pour l'installation d'une plaquette nasale de confort (non représentée).

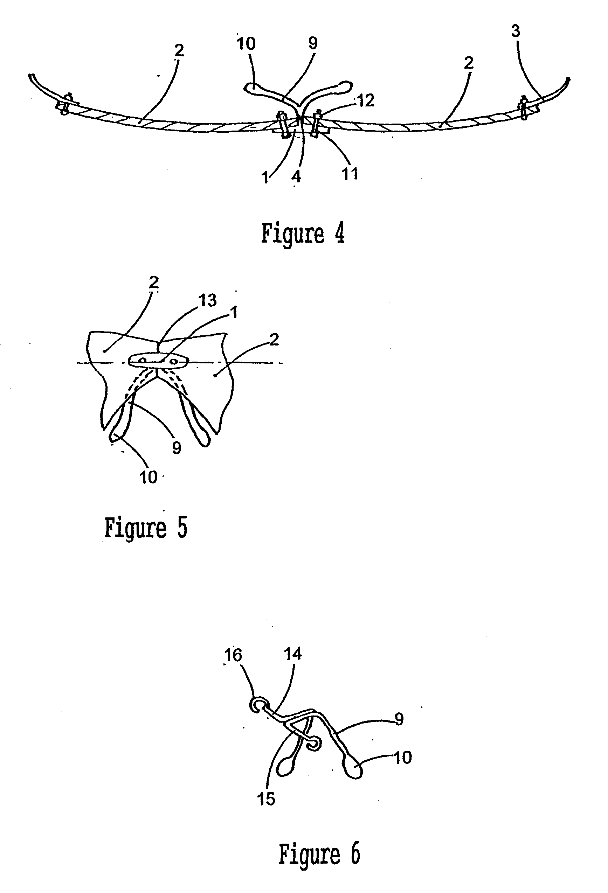

Sur la figure 4, on observe le montage de la barrette 1 et des verres 2. Dans cette variante, la barrette 1 est traversée par des vis 11 remplissant la fonction des tiges filetées 8. Des écrous 12 viennent assurer le blocage des verres enserrés entre la barrette 1 et les écrous 12.

Sur la figure 5, on observe mieux le montage bord à bord des verres 2 selon une ligne rectiligne 13. On voit à la forme des verres 2 que l'on pourrait se passer si désiré de support nasal 9, 10.

Sur la figure 6, on observe une variante de réalisation de l'élément de liaison 1 constituée de deux fils soudés 14,15 correspondant à la barrette et courbés en cercle 16 à leur extrémité pour permettre le passage d'une vis. Les courbures en cercle 11 remplissent la fonction des percements 6. Dans une variante non représentée, les fils ne sont pas courbés en cercle à leur extrémité mais recourbés en L en direction du verre, la branche d'extrémité du L étant filetée pour jouer le rôle des tiges filetées 8.

## Revendications

1. Une paire de lunettes sans cerclage comprenant deux verres de lunettes (2) couplés par un élément de liaison (1), **caractérisée en ce que** les deux verres (2) sont installés bord à bord en contact l'un avec l'autre au dessus de l'emplacement du nez, l'élément de liaison étant constitué d'une barrette comprenant
- une saillie (4) installée perpendiculairement à la surface des verres (2) et prévue pour traverser l'orifice constitué par l'ensemble de deux crantages (5) ménagés sur les côtés des verres (2) Installés bord à bord (13) au dessus de l'axe médian vertical du nez,
- d'un côté deux extrémités agencées pour la fixation d'un verre audit élément de liaison (1),
- et de l'autre côté deux extrémités (10) agencées pour l'installation d'une plaquette nasale de confort.

2. Une paire de lunettes selon la revendication 1, **caractérisée en ce que** les verres (2) sont montés bord à bord (13), par une tranche rectiligne prévue au-dessus de l'emplacement du nez.

3. Une paire de lunettes selon la revendication 1 ou 2, **caractérisée en ce que** l'élément de liaison (1) comprend des tiges filetées (8) pour la fixation des verres (2) avec un écrou (12).

4. Une paire de lunettes selon l'une des revendications 1 à 3, **caractérisée en ce que** l'élément de liaison (1) comprend des percements (6) pour la fixation des verres (2) grâce à des vis (11) indépendantes de l'élément de liaison.

5. Une paire de lunettes selon l'une des revendications 1 à 4, **caractérisée en ce que** l'élément de liaison (1) comprend un organe d'appui nasal installé de manière médiane et agencé pour traverser l'orifice constitué par les crantages (5) des verres installés bord à bord.

6. Une paire de lunettes selon l'une des revendications 1 à 5, **caractérisée en ce que** l'élément de liaison (1) comprend deux tiges (14,15) accolées dans leur partie centrale pour traverser l'orifice constitué par les crantages (5) ménagés dans deux verres installés bord à bord et comportant à une extrémité un passage pour une vis de fixation d'un verre.

7. Un ensemble (kit) pour la réalisation de lunettes comprenant
- un élément de liaison (1) constitué d'une barrette comprenant
- une saillie (4) installée perpendiculairement à la surface des verres (2) et prévue pour traverser l'orifice constitué par l'ensemble de deux crantages (5) ménagés sur les côtés des verres (2) installés bord à bord (13) au dessus de l'axe médian vertical du nez,
- d'un côté deux extrémités agencées pour la fixation d'un verre audit élément de liaison (1),
- et de l'autre côté deux extrémités (10) agencées pour l'Installation d'une plaquette nasale de confort, et éventuellement ses accessoires (vis (11) et écrous (12) ou simplement écrous)
- un gabarit pour l'usinage des verres selon une forme permettant leur montage bord à bord (10).

## Claims

1. A pair of rimless spectacles comprising two spectacle lenses (2) coupled by a connecting element (1), **characterised in that** the two lenses (2) are installed edge-to-edge in contact with each other above the position of the nose, the connecting element being formed by a bar comprising:
- a projection (4) installed perpendicularly to the surface of the lenses (2) and intended to pass through the orifice formed by the assembly of two notches (5) provided on the sides of the lenses (2) installed edge-to-edge above the vertical medial axis of the nose,
- on the one side two ends arranged for fixing a lens to said connecting element (1),
- and on the other side two ends (10) arranged for installation of a nose comfort pad.

2. A pair of spectacles according to claim 1 **characterised in that** the lenses (2) are mounted edge-to-edge (13) by a rectilinear edge face provided above the position of the nose.

3. A pair of spectacles according to claim 1 or claim 2 **characterised in that** the connecting element (1) comprises threaded rods (8) for fixing the lenses (2) with a nut (12).

4. A pair of spectacles according to one of claims 1 to 3 **characterised in that** the connecting element (1) comprises openings (6) for fixing the lenses (2) by means of screws (11) independent of the connecting element.

5. A pair of spectacles according to one of claims 1 to 4 **characterised in that** the connecting element (1) comprises a nose support member installed in medial relationship and arranged to pass through the orifice formed by the notches (5) in the lenses which are installed edge-to-edge.

6. A pair of spectacles according to one of claims 1 to 5 **characterised in that** the connecting element (1) comprises two rods (14, 15) joined side-by-side in their central part to pass through the orifice formed by the notches (5) in two lenses installed edge-to-edge and comprising at one end a passage for a lens fixing screw.

7. An assembly (kit) for the production of spectacles comprising
- a connecting element (1) formed by a bar comprising
- a projection (4) installed perpendicularly to the surface of the lenses (2) and intended to pass through the orifice formed by the assembly of two notches (5) provided on the sides of the lenses (2) installed edge-to-edge above the vertical medial axis of the nose,
- on the one side two ends arranged for fixing a lens to said connecting element (1),
- and on the other side two ends (10) arranged for installation of a nose comfort pad, and optionally its accessories (screws (11) and nuts (12) or simply nuts),
- a template for machining of the lenses in accordance with a shape permitting edge-to-edge mounting (10) thereof.

## Patentansprüche

1. Randlose Brille mit zwei Brillengläsern (2), die über ein Verbindungselement (1) miteinander verbunden sind, **dadurch gekennzeichnet, dass** die beiden Gläser (2) Rand an Rand in Kontakt miteinander über der Nasenstelle angeordnet sind, wobei das Verbindungselement aus einem Steg besteht, mit
- einem Vorsprung (4), der senkrecht zur Fläche der Gläser (2) angeordnet und dazu vorgesehen ist, die Öffnung zu durchqueren, die durch die Gruppe aus zwei Kerben (5) gebildet ist, welche auf den Seiten der Gläser (2) ausgebildet sind, die Rand an Rand (13) über der senkrechten Mittelachse der Nase angeordnet sind,
- zwei Enden auf einer Seite, die für die Befestigung eines Glases am Verbindungselement (1) ausgebildet sind,
- und zwei Enden (10) auf der anderen Seite, die für das Anordnen eines Komfort-Nasenpads ausgebildet sind.

2. Brille nach Anspruch 1, **dadurch gekennzeichnet, dass** die Gläser (2) durch einen geraden Schnitt, der über der Nasenstelle vorgesehen ist, Rand an Rand (13) angebracht sind.

3. Brille nach Anspruch 1 oder 2, **dadurch gekennzeichnet, dass** das Verbindungselement (1) Gewindestifte (8) zur Befestigung der Gläser (2) mit einer Mutter (12) aufweist.

4. Brille nach einem der Ansprüche 1 bis 3, **dadurch gekennzeichnet, dass** das Verbindungselement (1) Bohrungen (6) zur Befestigung der Gläser (2) mit von dem Verbindungselement unabhängigen Schrauben (11) aufweist.

5. Brille nach einem der Ansprüche 1 bis 4, **dadurch gekennzeichnet, dass** das Verbindungselement (1) ein Teil zur Abstützung auf der Nase aufweist, das mittig liegt und so angeordnet ist, dass es die Öffnung durchquert, die durch die Kerben (5) der Rand an Rand angeordneten Gläser gebildet ist.

6. Brille nach einem der Ansprüche 1 bis 5, **dadurch gekennzeichnet, dass** das Verbindungselement (1) zwei Stifte (14, 15) aufweist, die in ihrem Mittelabschnitt so aneinander befestigt sind, dass sie die Öffnung durchqueren, die durch die Kerben (5) gebildet ist, die in zwei Rand an Rand angeordneten Gläsern ausgebildet sind, und die an einem Ende einen Durchgang für eine Schraube zur Befestigung eines Glases aufweisen.

7. Baugruppe (Satz) zur Herstellung von Brillen, mit
- einem Verbindungselement (1), das aus einem Steg besteht,
- mit einem Vorsprung (4), der senkrecht zur Fläche der Gläser (2) angeordnet und dazu vorgesehen ist, die Öffnung zu durchqueren, die durch die Gruppe aus zwei Kerben (5) gebildet ist, welche auf den Seiten der Gläser (2) ausgebildet sind, die Rand an Rand (13) über der senkrechten Mittelachse der Nase angeordnet sind,
- mit zwei Enden auf einer Seite, die für die Befestigung eines Glases am Verbindungselement (1) ausgebildet sind,
- und auf der anderen Seite mit zwei Enden (10), die für das Anordnen eines Komfort-Nasenpads ausgebildet sind, und unter Umständen mit seinem Zubehör (Schrauben (11) und Muttern (12) oder nur Muttern),
- mit einer Schablone zur Fertigung der Gläser gemäß einer Form, die ihre Anbringung Rand an Rand (13) ermöglicht.
